# DEMANDE DE BREVET EUROPEEN

(11) **EP 1 152 394 A1**
(43) Date de publication de la demande: **07.11.2001**
(21) Numéro de dépôt: 01400947.6
(22) Date de dépôt: 12.04.2001
(51) Int. Cl.: G10H 1/00

(54) **Procédé de compression d'un fichier midi**

(30) Priorité: 28.04.2000 FR 0005479
(71) Demandeur: ALCATEL, 75008 Paris (FR)
(72) Inventeur: Boudet, Daniel, 75015 Paris (FR); Sarremejean, Xavier, 95490 Vaureal (FR); Helaine, Hubert, Woodley Reading, Berkshire RG5 4UH (GB); Herbette, Mathieu, Belmont, CA 94002 (US); Comps, Christophe, 92700 Colombes (FR)
(74) Mandataire: Lamoureux, Bernard

(57) **Abrégé**

Pour compresser un fichier originalement au format MIDI on le convertit (201) au format 0. On parcourt alors ce fichier au format 0 afin de réduire (202) le nombre d'instrument possible à 16. Puis On supprime des commandes MIDI n'ayant pas de rendu sonore, on remplace (203) les commandes NoteOn et NoteOff par une commande JouerNote. On supprime aussi les Δtime égaux à zéro. A partir de caractéristiques d'un appareil qui devra jouer le fichier compressé on recentre (205) les note dans une bande passante compatible avec l'appareil, puis on parcourt le fichier à la recherche de polyphonie. Si une polyphonie excède les capacités de l'appareil on la réduit (207) en fonction d'une liste de priorité d'instrument et d'une hauteur de note.

## Description

La présente invention a pour objet un procédé de compression d'un fichier MIDI. Le domaine de l'invention est celui des appareils, le plus souvent portables, qui ont des capacités de stockage mémoire et des puissances de calcul limitées. Cette limitation peut provenir du dimensionnement global de l'appareil par rapport aux ressources nécessaires pour la restitution sonore d'un fichier MIDI. Mais cette limitation peut aussi provenir de la quantité de ressources que l'appareil peut allouer à la restitution sonore d'un fichier MIDI. Parmi ces appareils on peut citer les téléphones mobiles ou les agendas électroniques. Le but de l'invention est d'accroître les performances sonores des appareils du domaine tel que défini précédemment. L'autre but de l'invention est de pouvoir créer et modifier simplement des mélodies complexes pouvant être jouées par les appareils du domaine.

Dans l'état de la technique on connaît des téléphones mobiles ayant des capacités de restitution sonores monophoniques. La mélodie jouée par un téléphone mobile, que ce soit pour une sonnerie ou à une autre occasion, est une succession de sons ayant une fréquence et une durée déterminée. Cependant on garde le même timbre. Il s'agit d'une sinusoïde pure envoyée sur un élément électro-acoustique qui la restitue. Il en résulte des sonorités métalliques ou électroniques, souvent très éloignées de l'oeuvre qui a servi de modèle à la mélodie.

La solution évidente pour résoudre ce problème serait d'enregistrer les mélodies que l'on souhaite faire jouer au téléphone mobile dans la mémoire de celui-ci, et sous un format tel qu'on peut le retrouver sur un compact disc par exemple. Le problème lié à cette solution est alors un problème de place en mémoire. En effet un format échantillonné est très gourmand en terme de volume-mémoire. De plus il faut ajouter à cela la tendance actuelle à proposer de plus en plus de mélodies sur un téléphone mobile. Cette tendance est justifiée par le fait que le nombre de téléphones mobiles en service augmentant, il faut être capable de distinguer quel téléphone mobile sonne. Il y a donc une incompatibilité entre la solution évidente et les nécessités techniques.

A cela s'ajoute une difficulté de modification d'un fichier échantillonné. En effet toutes les sonorités sont mélangées sans qu'il soit possible de distinguer l'une de l'autre au niveau de l'enregistrement du fichier. Si cette solution était choisie, il ne serait donc pas possible pour un utilisateur normal d'un téléphone mobile d'adapter une mélodie selon ses goûts.

Ces problèmes pourraient être résolus en faisant jouer au téléphone mobile, par exemple, un fichier de type MIDI. Il existe en effet un très grand nombre de ces fichiers qui peuvent être très facilement générés et manipulés par un utilisateur ayant des connaissances assez rudimentaires en musique. Il serait souhaitable de pouvoir stocker le plus grand nombre possible de ce type de fichiers sur un téléphone mobile, afin qu'un utilisateur ait le plus grand choix possible de mélodies. Cependant, de tels fichiers MIDI exigent une capacité mémoire plus importante et un processeur plus puissant que ceux des appareils portables. L'invention résout ce problème en comprimant les fichiers MIDI.

De manière plus précise, l'invention a pour objet un procédé de compression d'un fichier de type MIDI caractérisé en ce qu'il comprend une étape EVENT consistant à :
- parcourir le fichier MIDI à la recherche d'un événement de départ et de son événement de fin associé,
- remplacer le couple ainsi trouvé par un événement unique limité dans le temps.

Cet événement unique a exactement le même effet que le couple, mais la taille de l'événement unique est inférieure à celle du couple. Cette transformation du fichier MIDI original est totalement réversible quant au rendu sonore.

En particulier, le procédé est caractérisé en ce que l'évènement de départ est un "NoteON" défini par la norme MIDI, l'événement de fin associé est un "NoteOff" défini par la norme MIDI.

Avantageusement, le procédé est caractérisé en ce qu'il comprend en outre une étape POLY consistant à :
- définir les ressources nécessaires, en termes de mémoire et puissance de calcul, pour jouer une note avec un instrument donné,
- définir les ressources des moyens de restitution dont on dispose pour jouer un fichier de type MIDI,
- structurer une mémoire en table pour définir des priorités relatives d'instruments entre eux,
- détecter dans le fichier de type MIDI les moments ou une polyphonie dépasse les capacités des moyens de restitution,
- déterminer les ressources à mettre en oeuvre pour restituer une note,
- supprimer, au niveau d'une polyphonie détectée, autant de notes, correspondant à des instruments de priorité relative la plus faible parmi ceux présent dans la polyphonie, que nécessaire pour réduire la polyphonie à un niveau admissible par les moyens de restitution.

De manière préférée, le procédé est caractérisé en ce qu'il comprend en outre une étape BANDE consistant à :
- déterminer la bande passante qu'est capable de restituer un appareil,
- supprimer des notes qui sont en dehors des capacités de restitution de l'appareil.

Les étapes EVENT, POLY, BANDE peuvent être effectuées dans un . ordre quelconque.

L'invention sera mieux comprise à la lecture de la description qui suit et à l'examen des figures qui l'accompagnent. Ces figures sont présentées à titre d'exemple nullement limitatif de l'invention. Les figures montrent :
- Figure 1 : une illustration de moyens utiles pour la mise en oeuvre du procédé selon l'invention.
- Figure 2 : une illustration d'étapes du procédé selon l'invention.
- Figure 3 : un exemple de polyphonie à deux instruments.

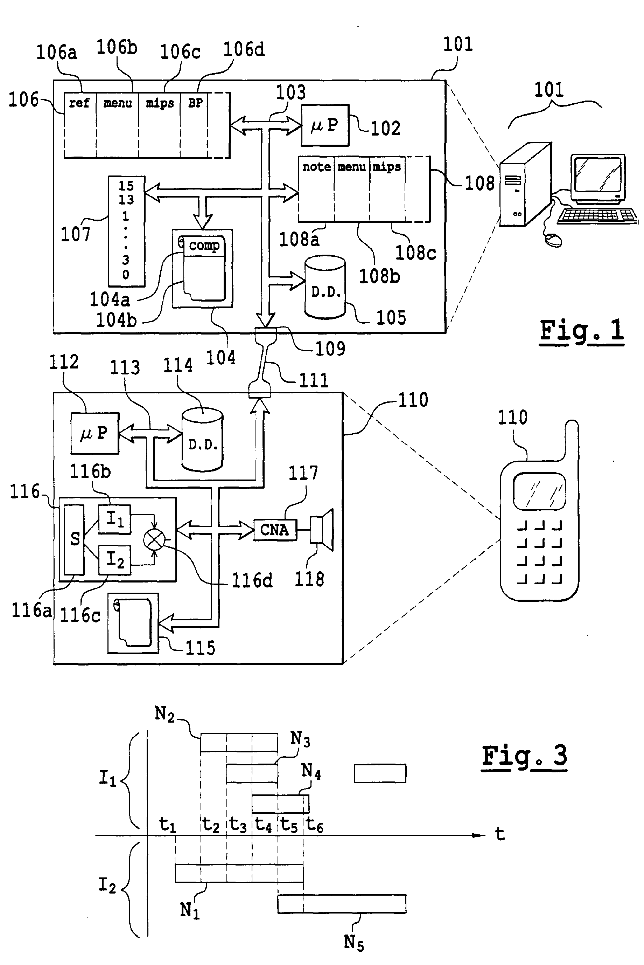

La figure 1 montre un appareil 101 de type micro-ordinateur personnel par exemple. L'ordinateur 101 comporte des moyens utiles pour la mise en oeuvre du procédé de compression selon l'invention. L'ordinateur 101 comporte un microprocesseur 102 connecté à un bus 103. Dans la description qui suit un bus est un ensemble de fils ou de pistes, qui permettent de véhiculer des signaux d'adresses, des signaux de données, des signaux de commandes, des signaux d'interruptions et ou des signaux d'horloges.

La figure 1 montre aussi que l'ordinateur 101 comporte une mémoire 104 de programme. La mémoire 104 est connectée au bus 103 et comporte au moins une zone 104a qui comporte les codes-instructions qui commandent le microprocesseur 102 lorsque celui-ci exécute le procédé selon l'invention. La mémoire 104 comporte une seconde zone 104b dans laquelle sont enregistrés des autres codes-instructions qui commandent le microprocesseur 102 lors de l'exécution d'autres tâches. La zone 104b comporte aussi une zone de mémoire de travail dans laquelle sont enregistrées des variables temporaires par exemple. L'ordinateur 101 comporte aussi une unité 105 de stockage qui lui permet d'enregistrer des fichiers, notamment ceux produits par le procédé selon l'invention. L'unité 105 est connectée au bus 103.

La figure 1 montre aussi que l'ordinateur 101 comporte une mémoire 106 de référencement d'appareils, une mémoire 107 de définition de priorité d'instruments de musique, et une mémoire 108 de définition de moyens nécessaires pour jouer une note. Les mémoires 106 à 108 sont connectées au bus 103. Ces mémoires peuvent être physiquement distinctes ou n'être que des parties d'une mémoire plus grande.

La mémoire 106 est structurée en tables. Chaque ligne de la mémoire 106 correspond à un appareil. La mémoire 106 comporte, dans notre exemple, quatre colonnes. Une première colonne 106a correspond à une référence d'un appareil. Une deuxième colonne 106b correspond à la mémoire maximum que l'appareil référencé peut allouer pour la restitution sonore d'un fichier de type MIDI. Une troisième colonne 106c correspond à la puissance microprocesseur maximale que l'appareil référencé peut allouer pour la restitution sonore d'un fichier de type MIDI. Enfin une quatrième colonne 106d permet de stocker la bande passante sonore de restitution sonore de l'appareil référencé. La table 106 est utile afin de pouvoir produire un fichier compressé, à partir d'un fichier de type MIDI, compatible avec les possibilités de l'appareil sur lequel il doit être joué.

La mémoire 107 est, par exemple, un tableau dans lequel sont enregistrés par ordre d'importance mélodique croissante les instruments qui peuvent être utilisés dans un fichier compressé. La mémoire 107 est utile pour le traitement des polyphonies dépassant les capacités de restitution de l'appareil auquel est destiné le fichier compressé à produire.

**TABLE 1:**

| priorité décroissante des instruments. | |
|---|---|
| N° INSTRUMENT selon invention | INSTRUMENT |
| 15 | Effets spéciaux (téléphone !, explosion...) |
| 13 | Instruments ethniques (sitar, banjo...) |
| 1 | Percussion chromatique (type xylophone) |
| 2 | Orgue |
| 6 | Ensemble (type orchestre, chorale) |
| 9 | Instrument à vent (type flûte) |
| 7 | Cuivre (type trompette, tuba) |
| 8 | Saxophone / basson / clarinette |
| 10-12 | Synthétiseur |
| 14 | Percussions |
| 5 | Instrument à corde (type violon / harpe) |
| 4 | Basse |
| 3 | Guitare |
| 0 | Piano |

Dans la table 1 l'instrument le plus prioritaire est le piano.

La mémoire 108 est structurée en table comportant trois colonnes. Une première colonne 108a code un identifiant d'une note, une deuxième colonne 108b une quantité de mémoire nécessaire pour restituer cette note, et une troisième colonne 108c la puissance microprocesseur nécessaire pour la restitution de ladite note. La mémoire 108 est donc un moyen pour déterminer la puissance nécessaire pour restituer une note. La mémoire 108 est utilisée en même temps que la mémoire 106. Dans la pratique la table 108 n'est pas forcément une table comportant toutes les notes jouables. Il peut s'agir de formules permettant de déterminer, en fonction d'un instrument et d'une note, la puissance nécessaire pour jouer cette note. Dans la pratique on préférera utiliser une formule car cela est moins coûteux en termes d'espace mémoire. Cependant pour la bonne compréhension de l'invention la description d'une table est plus aisée.

La figure 1 montre aussi que l'ordinateur 101 compote un port 109. Le port 109 permet de connecter l'ordinateur 101 à un appareil 110 via un câble 111. Le port 109 est connecté au bus 103. Dans la pratique le port 109 peut être à un format quelconque RS232, USB ou autre. Mais le port 109 peut aussi être remplacé par des moyens hertziens, par exemple un module « bluetooth ». Dans ce cas, l'appareil 110 doit être doté de moyens « bluetooth » lui aussi. La connexion effectuée grâce au câble 111 permet de transférer un fichier obtenu par le procédé selon l'invention de l'ordinateur 101 à l'appareil 110. Dans la présente description on considère que l'appareil 110 est un téléphone mobile. Dans la pratique il peut s'agir de tout appareil susceptible de restituer de manière sonore un fichier produit par le procédé selon l'invention.

Le téléphone 110 comporte un microprocesseur 112 connecté à un bus 113. Le téléphone 110 comporte aussi une unité 114 de stockage qui lui permet d'enregistrer des fichiers produits par le procédé selon l'invention. Le téléphone 110 comporte encore une mémoire 115, des moyens 116 de restitution sonore d'un fichier produit par le procédé selon l'invention, et un convertisseur 117 numérique analogique. Les éléments 114 à 117 sont connectés au bus 113. Le convertisseur 117 est connecté à un élément électro-acoustique 118. Dans la description l'élément électro-acoustique 118 est un haut-parleur. La mémoire 115 comporte des codes-instructions qui commandent le microprocesseur 112, ainsi que des zones de mémoire de travail.

Les moyens 116 peuvent être soit des codes-instructions, soit un circuit spécialisé dans la restitution de fichiers produits par le procédé selon l'invention. Les fichiers produits par le procédé selon l'invention seront appelés dans la description les fichiers SEQ. Dans un exemple préféré les moyens 116 sont des codes-instructions. Ces codes-instructions sont exécutés soit par un processeur du traitement du signal, soit par un microprocesseur tel que le microprocesseur 112. Les codes-instructions 116 peuvent alors être découpés en plusieurs sous-programmes. Un premier sous-programme 116a est appelé séquenceur. Le séquenceur parcourt un fichier SEQ et décode les instructions de ce fichier. Le séquenceur alloue de l'espace mémorisé pour des instruments 116b et 116c en fonction des instructions du fichier SEQ. Par exemple, si au cours de ce parcours du fichier le séquenceur lit une instruction affectant un instrument 11 à un canal, le séquenceur alloue l'espace 116b mémoire afin de pouvoir exécuter le code-instruction correspondant à cet instrument. Il en va de même pour l'espace mémoire 116 c, correspondant à un instrument 12. Puis le séquenceur poursuit son parcours du fichier SEQ et envoie des ordres qu'il y lit aux instruments ad hoc. Les instruments produisent alors des échantillons qui sont envoyés à un mélangeur 116d. Les échantillons mélangés sont alors envoyés vers le convertisseur 117 qui les transforme en signaux analogiques qui seront restitués par le haut-parleur 118. Lorsqu'un programme, par exemple le séquenceur 116a, envoie des ordres à un autre programme, par exemple l'instrument I1, il faut comprendre que le séquenceur appelle un sous programme avec des ordres comme paramètres.

Si l'appareil 110 est référencé dans le tableau 106, la colonne 106b correspondant à l'appareil 110 contient la taille de la mémoire 116, hors la taille du séquenceur et du mélangeur. La colonne 106c contient la puissance que peut consacrer le microprocesseur 112 à l'exécution du code-instruction de la mémoire 116. La mémoire 106d comporte la bande passante de l'ensemble convertisseur 117 et haut-parleur 118. Le nombre de mélodies qui peut être stocké dans l'appareil 110 est limité par la taille de l'unité 114. Il est donc important que les mélodies soient stockées sous une forme correctement compressée sans que cette compression implique par la suite des calculs trop importants pour pouvoir reproduire les fichiers ainsi compressés. Cela est obtenu grâce au format d'un fichier produit par le procédé selon l'invention.

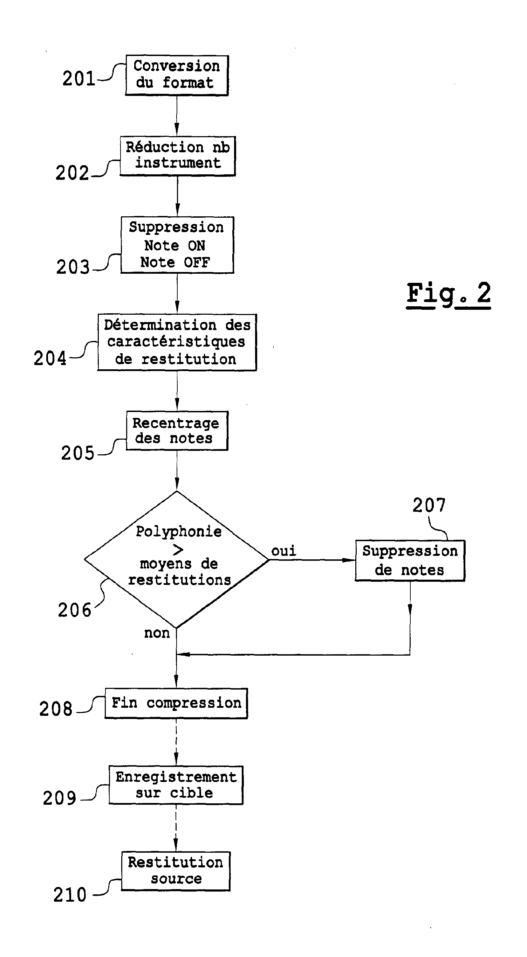

La figure 2 décrit des étapes d'un mode de réalisation du procédé selon l'invention. Ce procédé est décrit comme étant exécuté par l'ordinateur 101. Il est cependant possible d'exécuter le procédé sur n'importe quelle plate-forme matérielle comportant les moyens ad-hoc. Une telle plate-forme est par exemple un téléphone mobile. Le procédé produit un fichier qu'il faut transférer sur l'appareil qui en a besoin.

Le procédé selon l'invention traite un fichier de type MIDI. Cela signifie qu'il s'agit d'un fichier composé d'une suite de commandes exécutables par un appareil comportant un interpréteur pour ces commandes.

Les fichiers MIDI peuvent avoir des formats différents, notés format 0, format 1 et format 2 (cf. norme de la MIDI Manufacturer Association 1.0 specification, level 2, novembre 1999). Le format 0 est le plus simple. Un fichier au format 0 comporte un en-tête suivi d'une piste unique. L'en-tête comporte entre autres une base de temps pour le fichier. La piste unique comporte des commandes au format MIDI. La différence entre le format 0 et les autres formats se situe principalement dans le nombre de pistes. Le passage d'un format 1 ou 2 à un format 0 (étape 201) se fait de manière connue et en utilisant des algorithmes disponibles. Un fichier MIDI comporte principalement des commandes ayant chacune une date d'exécution.

Dans le mode de réalisation du procédé de la figure 2, on suppose que le fichier MIDI a un format 1 ou 2 et une étape 201 préliminaire de conversion du format est effectuée pour convertir un fichier MIDI de format 1 ou 2 à un format 0. Le principe de la conversion est de regrouper toutes les commandes de toutes les pistes d'un fichier d'un format 1 ou 2, en une seule piste d'un fichier au format 0. On pourrait cependant ne pas procéder à cette conversion, et traiter chaque piste d'un fichier MIDI au format 1 ou 2 de manière indépendante.

Une fois la conversion effectuée, on passe, dans le mode de réalisation présenté, à une étape 202 de réduction du nombre d'instruments. Cette étape est optionnelle. Elle permet un meilleur taux de compression. Dans un fichier MIDI, on trouve des commandes qui désignent des instruments. Ces instruments sont désignés par un champ dont la valeur et comprise entre 0 et 127. Il y a donc 128 instruments possibles dans un fichier MIDI. L'ensemble de ces 128 instruments appartient à 16 familles. La réduction du nombre d'instruments se fait donc en élisant un représentant par famille. On aboutit au final à 16 instruments possibles. Chaque instrument d'une famille est alors remplacé par le représentant de sa famille. Le remplacement s'effectue selon la table suivante :

**Table 2**

| N° INSTRUMENT (dans la norme GM) | N° de la famille | INSTRUMENT représentant la famille |
|---|---|---|
| 0-7 | 0 | Piano |
| 8-15 | 1 | Percussion Chromatique (type xylophone) |
| 16-25 | 2 | Orgue |
| 25-32 | 3 | Guitare |
| 33-40 | 4 | Basse |
| 41-48 | 5 | Instrument à corde (type violon / harpe) |
| 49-56 | 6 | Ensemble (type orchestre, chorale) |
| 57-64 | 7 | Cuivre (type trompette / tuba) |
| 65-72 | 8 | Saxophone / basson / clarinette |
| 73-80 | 9 | Instrument à vent (type flûte) |
| 81-88 | 10 | Synthétiseur (de type solo) |
| 89-97 | 11 | Synthétiseur (de type "nappes") |
| 97-104 | 12 | Synthétiseur (de type "effets spéciaux") |
| 105-112 | 13 | Instruments ethniques (sitar, banjo...) |
| 113-120 | 14 | Percussions |
| 120-127 | 15 | Effets spéciaux (téléphone!, explosion...) |

Dans le meilleur mode de réalisation du procédé selon l'invention, on choisit aussi de renuméroter les instruments. C'est-à-dire qu'à chaque représentant de famille on associe un numéro propre au format du fichier que l'on souhaite obtenir. Comme il y a 16 instruments, ce numéro peut être codé sur 4 bits, au lieu des 7 nécessaires si on avait conservé le numéro d'origine de l'instrument. Le seul inconvénient de cette démarche est que le fichier ainsi obtenu après une étape 202 n'est plus totalement compatible avec la norme générale MIDI. Cependant à l'aide de la table 2 un retour en arrière est aisé, même si le fichier résultant n'est pas identique au fichier d'origine.

Conformément à l'invention, la compression du fichier MIDI est obtenue principalement par une étape EVENT, qui réside en une recherche d'événements et en leur remplacement par un évènement unique. Dans le mode de réalisation présenté, cette étape s'applique, à titre d 'exemple, sur les événements NoteOn et NoteOff. Dans l'étape EVENT 203 on recherche tous les évènements NoteOn et les NoteOff qui sont associés à chaque note. Une NoteON est une commande MIDI. Cette commande MIDI est codée sur trois octets. On trouve dans cette commande un code-instruction NoteON, l'identification d'un canal MIDI, une information de volume, et un numéro de note. Dans la norme générale MIDI il existe 16 canaux, chaque canal est associé dynamiquement à un instrument. Une instruction d'association canal instrument comporte un code-instruction d'association, un identifiant de canal et un identifiant d'un instrument. L'identifiant de l'instrument est tel que défini par la table 2. L'association d'un canal à un instrument se fait par une commande MIDI. Un NoteOff désigne le même canal et la même note que le NoteON auquel il est associé, c'est d'ailleurs ce qui permet d'apparier un NoteON et un NoteOff. Dans la pratique seul un paramètre, le volume, différencie un NoteOn d'un NoteOff. Un NoteOff est un NoteOn dont le volume est nul. Une fois que la paire NoteON - NoteOff est identifiée, on la remplace par une instruction unique JouerNote, codée sur 4 octets. L'instruction JouerNote comporte des informations de canal, de volume, de note et de durée.

Dans le fichier SEQ la durée d'une note est codée en une fraction de la durée d'une noire, cette fraction est appelée BTR (base de temps relative). La durée réelle d'une note s'obtient donc en multipliant la durée par la BTR par la base de temps du fichier codé dans l'en-tête du fichier. Tout comme le fichier d'origine, le fichier SEQ comporte un en-tête qui code entre autres la base de temps du fichier. La BTR est obtenu par un parcours du fichier. La BTR est, par exemple, le plus grand commun diviseur des durées des notes du fichier. On procède de manière identique pour le codage des délais, aussi appelés delta time.

Dans le fichier MIDI original chaque événement est précédé d'une information de temps, appelée delta time. Le delta time code le temps qui doit s'écouler jusqu'à l'exécution de la prochaine commande MIDI. Chaque commande MIDI est précédée d'un delta time, même si celui-ci est égal à 0. Dans le fichier séquentiel la commande JouerNote est elle aussi précédée d'une commande delta time. Cependant dans la mesure où on supprime la commande NoteOff, on économise aussi la place d'un delta time, celui qui précédait la commande NoteOff.

De plus dans le fichier SEQ on supprime les delta time égaux à 0. Les commandes qui doivent être exécutées simultanément se suivent donc sans être séparées par des delta time égaux à 0.

A la sortie de l'étape 203 on a donc déjà un gain de trente à quarante pour cent de la taille par rapport au fichier d'origine.

On passe à une étape 204 de détermination des caractéristiques de restitution. Cette étape est mise en oeuvre, par exemple, par l'ordinateur 101. Dans cette étape, on peut alors afficher sur un écran de l'ordinateur 101 l'ensemble des téléphones référencés dans la mémoire 106. L'utilisateur n'a alors plus qu'à sélectionner la référence de son téléphone pour définir les caractéristiques de restitution. Si son téléphone n'y figure pas, ou si l'utilisateur souhaite utiliser d'autres paramètres, l'utilisateur peut alors saisir ses propres paramètres. Dans la pratique, et pour un téléphone donné, ces paramètres sont la mémoire disponible pour la restitution sonore d'un fichier SEQ, la puissance processeur disponible pour la restitution sonore d'un fichier SEQ, ainsi que la bande passante de la chaîne audio du téléphone. Sur la figure 1 la chaîne audio est constituée par le convertisseur 117 et le haut-parleur 118. Un autre paramètre auquel peut accéder l'utilisateur est l'ordre dans lequel sont classés les instruments de musique dans la table 107. En effet par défaut l'instrument le plus prioritaire est le piano suivi par la guitare (cf: TABLE 1). Si l'utilisateur préfère la guitare il peut décider que la guitare sera plus prioritaire que le piano. Pour cela l'utilisateur peut par exemple modifier l'ordre des instruments dans la mémoire107.

Les paramètres ainsi sélectionnés, ou saisis, sont fournis au procédé selon l'invention comme paramètre pour la suite du procédé.

On passe à une étape optionnelle 205 de recentrage des notes. L'étape 205 est utile si, dans le fichier que l'on souhaite compresser, il existe des notes dont la restitution par l'appareil de restitution n'est pas possible à cause de la bande passante du convertisseur 117 et du haut-parleur 118. Dans ce cas, on déplace les notes afin qu'elles soient dans la bande passante de l'appareil sélectionné. Par exemple toutes les notes qui se situent en dessous de la bande passante sont remplacées par les notes de l'octave la plus basse qui puisse être jouée, toutes les notes qui sont situées au-dessus de la bande passante sont remplacées par les notes de l'octave la plus haute qui puisse être jouée.

On constate ici l'importance du paramètre bande passante, puisque celui-ci varie d'un appareil à l'autre. Selon l'appareil sélectionné, on n'aboutira donc pas au même fichier SEQ.

On passe à une étape optionnelle 206 d'analyse des moments de polyphonie dans le fichier à compresser. La figure 3 permet d'illustrer cette étape. On suppose que l'instrument I1 est un piano, et que l'instrument 12 est une guitare. De plus on respecte les priorités de la table 1. On suppose que le téléphone 110 a une puissance maximum de 5 mips (millier d'instructions par seconde) pour la restitution de fichier SEQ, ainsi que 2 kilooctets de mémoire. De plus chaque note jouée par I1 nécessite 1,5 mips et 500 octets, chaque note jouée par I2 nécessite 1 mips et 1 kilooctet. La figure 3 montre qu'à un instant t1 l'instrument I2 commence à jouer une note N1. On a donc besoin entre t1 et t2 d'1 mips et 1 kilooctet, cela est inférieur aux capacités allouables par le téléphone 110. On peut donc jouer toute la partition entre t1 et t2. A t2 l'instrument I1 joue la note N2 en même temps que N1. La puissance nécessaire est alors de 2,5 mips et de 1,5 kilooctets, ce qui satisfait toujours aux exigences de l'appareil 110. A t3 la partition fait apparaître une troisième note N3 jouée par l'instrument I1. A t3 la puissance nécessaire est alors de 4 mips et 2 kilooctets.

A t4 l'instrument I1 joue N1, N3 et une troisième note N4. L'instrument 12 joue toujours n1. La puissance nécessaire pour restituer cette combinaison est alors de 5,5 mips et 2,5 kilooctets. On dépasse donc la puissance disponible que ce soit en puissance de calcul ou en capacité de mémoire. On sait que I1 est prioritaire par rapport à I2, on va donc cesser de jouer la note N1 afin de satisfaire aux exigences de l'appareil 110.

A un instant t5 l'instrument I1 cesse de jouer N2 et N3 pour ne plus jouer que N4. L'instrument I2 continue à jouer N1 mais commence aussi à jouer une note N5. La puissance nécessaire à t5 est donc de 4,5 mips mais il faut 2,5 kilos de mémoire. Il faut donc supprimer une note de I2 qui est l'instrument le moins prioritaire. La note supprimée sera la note la plus basse à savoir N5. A t6, I2 arrête de jouer N1. Il est donc possible de jouer N4 et N5 en même temps. Entre t5 et t6 N5 n'est donc pas jouée. L'analyse du fichier se poursuit ainsi.

Lorsqu'une polyphonie est détectée, c'est-à-dire lorsque plusieurs notes doivent être restituées en même temps, on calcule la puissance nécessaire à la restitution de cette polyphonie. Si la puissance n'est pas suffisante, que ce soit en terme de puissance microprocesseur ou de capacité mémoire, on commence par supprimer des notes de l'instrument de la polyphonie qui a la priorité la plus faible. Si cet instrument qui a la priorité la plus faible joue plusieurs notes au moment de la polyphonie, on commence par supprimer les notes aux sonorités les plus basses. On supprime ainsi des notes jusqu'à ce que les notes restantes puissent être restituées avec les moyens de l'appareil 110. On procède ainsi pour chaque apparition ou disparition de note dans le fichier d'origine. Cette étape de suppression est l'étape 207.

Il est possible que dans le fichier les instants de polyphonie soient tels qu'ils n'excèdent jamais la puissance que peut fournir l'appareil 110. Dans ce cas, aucune compression supplémentaire n'est requise et le procédé de compression est donc terminé. Dans le cas contraire, on passe à l'étape 207.

Dans l'état 208, l'utilisateur de l'ordinateur 101 dispose donc, stocké dans l'unité 105, d'un fichier au format SEQ.

On peut alors passer à une étape 209 d'enregistrement sur la cible. La cible ici est l'appareil 110. Dans l'étape 209 on connecte l'ordinateur 101 et le téléphone 110 par le câble 111. Les mémoires 115 et 104 comportent des codes-instructions qui permettent aux microprocesseurs 112 et 102 de communiquer et de s'échanger des données selon un protocole quelconque. Les fichiers enregistrés dans l'unité 105 sont transférés vers l'unité 114. Une fois le transfert effectué, l'appareil 110 redevient autonome et on peut passer à une étape 210 de restitution sonore. Dans l'étape 210 l'utilisateur du téléphone 110 a choisi une mélodie parmi celles stockées dans l'unité 114. Cette mélodie étant enregistrée sur l'unité 114 sous la forme d'un fichier SEQ obtenu par un procédé selon l'invention. Le microprocesseur 112 commandé par les codes-instructions de la mémoire 116 lit alors ce fichier SEQ pour produire des échantillons qui seront transformés par le convertisseur 117 et le haut-parleur 118 en sons.

Le format du fichier SEQ obtenu par le procédé selon l'invention permet aussi une restitution rapide. En effet, en diminuant le nombre d'instruction, pour un même rendu sonore, on limite aussi les besoins d'accès à la mémoire et l'encombrement du bus 113. La restitution sonore d'un fichier SEQ n'est donc pas préjudiciable aux autres processus exécutés par le microprocesseur 112.

Le programme utilisé sur l'ordinateur 101 pour produire le fichier SEQ peut aussi servir à modifier le fichier SEQ obtenu. Il est en effet possible d'éditer ce fichier sous forme d'une partition telle que représentée à la figure 3 par exemple pour ajuster la tonalité ou la longueur des notes. Néanmoins une fois cette modification effectuée il faudra à nouveau vérifier que le fichier ainsi modifié entre bien dans les spécifications de l'appareil sur lequel il est destiné à être enregistré.

## Revendications

1. Procédé de compression d'un fichier de type MIDI **caractérisé en ce qu'**il comprend une étape EVENT consistant à :
- parcourir (203) le fichier MIDI à la recherche d'un événement de départ et de son événement de fin associé,
- remplacer (203) le couple ainsi trouvé par un événement unique limité dans le temps.

2. Procédé selon la revendication 1, **caractérisé en ce que** l'événement de départ est un "NoteON" défini par la norme MIDI, l'événement de fin associé est un "NoteOff" défini par la norme MIDI.

3. Procédé selon l'une des revendications 1 ou 2, **caractérisé en ce qu'**il comprend en outre une étape POLY consistant à :
- définir (204) les ressources nécessaires, en termes de mémoire et puissance de calcul, pour jouer une note avec un instrument donné,
- définir (204) les ressources des moyens de restitution dont on dispose pour jouer un fichier de type MIDI,
- structurer une mémoire en table (107) pour définir des priorités relatives d'instruments entre eux,
- détecter (206) dans le fichier de type MIDI les moments ou une polyphonie dépasse les capacités des moyens de restitution,
- déterminer (108) les ressources à mettre en oeuvre pour restituer une note,
- supprimer (207), au niveau d'une polyphonie détectée, autant de notes, correspondant à des instruments de priorité relative la plus faible parmi ceux présent dans la polyphonie, que nécessaire pour réduire la polyphonie à un niveau admissible par les moyens de restitution.

4. Procédé selon l'une des revendications 1 à 3, **caractérisé en ce qu'**il comprend en outre une étape BANDE consistant à :
- déterminer la bande passante qu'est capable de restituer un appareil,
- supprimer des notes qui sont en dehors des capacités de restitution de l'appareil.

5. Procédé selon l'une des revendications 1 à 4, **caractérisé en ce qu'**il comprend en outre une étape TRANSLATE consistant à :
- déterminer la bande passante qu'est capable de restituer un appareil,
- translater (205) des notes, d'un fichier de type MIDI, situées en dehors de cette bande passante afin que ces notes soient comprises dans cette bande passante.

6. Procédé selon l'une des revendications 1 à 5, **caractérisé en ce qu'**il comprend en outre une étape BASSE consistant à :
- au cas ou on détecte une polyphonie due à un seul instrument et dont la restitution dépasse les capacités des moyens de restitution, commencer par supprimer les notes les plus basses.

7. Procédé selon l'une des revendications 1 à 6, **caractérisé en ce qu'**il comprend en outre une étape REDUC consistant à :
- réduire, dans un fichier de type MIDI, le nombre d'instrument possible.

8. Procédé selon la revendication 7, **caractérisé en ce que** pour réduire (202) le nombre d'instrument on les regroupe en famille, chaque instrument étant remplacé, dans un fichier de type MIDI, par le représentant de la famille à laquelle il appartient.

9. Procédé selon l'une des revendications 1 à 8, **caractérisé en ce qu'**il comprend en outre une étape SUPRESS consistant à :
- on supprime, dans un fichier de type MIDI, des commandes qui n'ont aucun rendu sonore.

10. Procédé, **caractérisé en ce qu'**il comprend en outre une étape consistant à :
- on met en oeuvre le procédé, selon l'une des revendications 1 à 9, sur un premier appareil (101) pour produire un fichier compressé,
- on transfert le fichier compressé sur un deuxième appareil (110),
- on joue le fichier compressé sur le deuxième appareil.

11. Procédé, **caractérisé en ce que**:
- on met en oeuvre le procédé, selon l'une des revendications 1 à 9, sur un appareil pour produire un fichier compressé,
- on joue le fichier compressé sur cet appareil.
